# EUROPÄISCHE PATENTANMELDUNG

(11) **EP 2 202 362 A1**
(43) Veröffentlichungstag der Anmeldung: **30.06.2010**
(21) Anmeldenummer: 09006541.8
(22) Anmeldetag: 14.05.2009
(51) Int. Cl.: E02D 19/18, E02D 17/13

(54) **Verfahren zum Herstellen einer Schlitzwand im Boden**

(71) Anmelder: BAUER Maschinen GmbH, 86529 Schrobenhausen (DE)
(72) Erfinder: Gerressen, Franz, Werner, 86529 Schrobenhausen (DE); Wenzl, Patrick, Alexander, Florian, Dr., 86152 Augsburg (DE); Stötzer, Erwin, Emil, 86551 Aichach (DE)
(74) Vertreter: Wunderlich, Rainer

(57) **Zusammenfassung**

Die Erfindung betrifft ein Verfahren zum Herstellen einer Schlitzwand im Boden, wobei nach dem Erreichen der gewünschten Schlitztiefe beim Herausziehen der Schlitzwandfräse aus dem Boden eine abbindende Komponente an dem Rahmen der Schlitzwandfräse in den Frässchlitz eingeleitet wird und die abbindende Komponente mit einer ersten Suspension, welche beim Abteufen der Schlitzwandfräse eingeleitet wird, zu einer zweiten abbindenden Suspension vermischt wird, welche zu der Schlitzwand aushärtet.

## Beschreibung

Die Erfindung betrifft ein Verfahren zum Herstellen einer Schlitzwand im Boden gemäß dem Oberbegriff des Anspruchs 1.

Eine Schlitzwand ist ein Bauelement, das insbesondere bei Baugrubenumschließungen und Baugrubensicherungen Verwendung findet. Mit Schlitzwandgreifern oder Schlitzwandfräsen wird ein schmaler Schlitz im Boden erstellt, welcher zum Bilden der Schlitzwand mit einer aushärtenden Suspension verfüllt wird. Zur Stabilisierung wird der Schlitz schon während des Aushebens mit einer stützenden Flüssigkeit verfüllt. Mit der Schlitzwand wird üblicherweise eine Dichtigkeit gegen anstehendes Grundwasser angestrebt, so dass ein Grundwassereinbruch in eine Baugrube vermieden wird.

Zum Erstellen der Schlitzwand sind im Wesentlichen das Ein-Phasen- und das ZweiPhasen-Verfahren bekannt.

Beim Ein-Phasen-Verfahren wird der Schlitz von Beginn an durch die Suspension abgestützt, die anschließend auch zur Schlitzwand aushärtet.

So beschreibt beispielsweise die DE-C-41 41 629 ein derartiges Verfahren zur Herstellung von wasserundurchlässigen Dichtwänden, bei welchen schon beim Erstellen des Frässchlitzes eine selbsterhärtende Suspension eingeleitet wird. Dabei wird beim Fräsen mit Boden vermischte Suspension nach über Tage abgepumpt, aufbereitet und wieder rückgepumpt. Beim Aufbereiten wird Bodenmaterial gezielt entreichert, dessen Körnigkeit einen vorgegebenen Grenzwert übertrifft. Die Feinteile aus dem Boden enthaltende Suspension wird mit Frischsuspension vermischt und dann in den Schlitz rückgeleitet. Nach Erreichen der Endtiefe wird die Schlitzwandfräse rückgezogen und die Suspension im Schlitz kann zur Schlitzwand aushärten.

Ein Verfahren zum Herstellen einer Schlitzwand im Boden nach dem Zwei-Phasen-Verfahren ist beispielsweise aus der DE-C-195 30 827 bekannt. Hierbei wird zunächst ein Frässchlitz ausgehoben und mit einer nicht aushärtenden Suspension verfüllt. Der beim Fräsen anfallende Bodenaushub wird mit dieser ersten Suspension nach über Tage gefördert. Nach dem Abteufen des Frässchlitzes wird unter Verdrängung der Stützsuspension in den Schlitz eine aushärtende Suspension eingebracht, welche dann zur Schlitzwand aushärtet.

Beiden Verfahren gemein ist, dass kontinuierlich Fräsklein abgepumpt, anschließend aufbereitet und nachfolgend in den Frässchlitz zurückgeführt wird. Zur Herstellung der Bindemittel-Boden-Mischung erfordern diese Verfahren daher vergleichsweise aufwändige, über Tage angeordnete Pump-, Misch- und Speichereinrichtungen.

Daher wurde ein neues Verfahren entwickelt, welches als sogenanntes CSM^{®}-Verfahren bekannt und Gegenstand der EP 1 452 645 B2 ist.

Bei diesem Verfahren zum Herstellen einer Schlitzwand im Boden ist vorgesehen, dass das abgeräumte Bodenmaterial von den Fräsrädern mit dem abgeräumten Bodenmaterial unmittelbar im Frässchlitz mit der abbindbaren Flüssigkeit vermischt wird, in einen rückwärtigen Bereich des Frässchlitzes gefördert wird und die so gebildete Suspension im Frässchlitz zum Bilden der Schlitzwand belassen wird.

Insbesondere wird keine Bodenmaterial enthaltende Suspension abgepumpt, sondern eine abbindbare Flüssigkeit wird direkt im Bereich der Fräsräder zugegeben und mit dem Fräsklein vermengt, um dabei eine aushärtende Flüssigkeit-Boden-Mischung herzustellen, so dass nach dem Aushärten der Suspension das Bodenmaterial Bestandteil der Schlitzwand wird. Somit ist es nicht mehr erforderlich, das abgeräumte Bodenmaterial durch Pumpeinrichtungen mit erheblichem Aufwand nach oben zu befördern.

Aus der JP-A-09273150 ist ferner ein Verfahren bekannt, wobei in einem ersten Schritt eine Fräse mit einem kastenförmigen Rahmen an einem Tragseil hängend zum Bilden eines Schlitzes in den Boden abgeteuft wird. Durch die Fräsräder an dem kastenförmigen Rahmen wird schrittweise Fräsklein mit Flüssigkeit und Zementsuspension vermengt und am Rahmen vorbei in einen rückwärtigen Bereich des Schlitzes gefördert.

Es ist **Aufgabe** der vorliegenden Erfindung, ein Verfahren zum Herstellen einer Schlitzwand im Boden anzugeben, mit dem eine Schlitzwand effizient und in guter Qualität auch bei schwierigen Bodenverhältnissen, insbesondere bei bindigen Böden, hergestellt werden kann.

Diese Aufgabe wird durch ein Verfahren mit den Merkmalen des Anspruchs 1 gelöst. Bevorzugte Ausführungsformen sind in den abhängigen Ansprüchen angegeben.

Bei dem erfindungsgemäßen Verfahren zur Herstellung einer Schlitzwand im Boden ist zunächst vorgesehen, dass mindestens ein an einem Rahmen einer Schlitzwandfräse angeordnetes Fräsrad durch einen Antrieb in eine Drehbewegung versetzt wird, die Schlitzwandfräse in den Boden abgesenkt wird, wobei unterhalb des Fräsrades befindliches Bodenmaterial abgeräumt und ein Frässchlitz hergestellt wird, und eine Flüssigkeit am Rahmen der Schlitzwandfräse in den Frässchlitz eingeleitet und unmittelbar im Frässchlitz mit dem abgeräumten Bodenmaterial zu einer ersten, nicht aushärtenden Suspension vermischt wird.

Erfindungsgemäß wird nach dem Erreichen der gewünschten Schlitztiefe beim Herausziehen der Schlitzwandfräse aus dem Boden eine abbindende Komponente an dem Rahmen der Schlitzwandfräse in den Frässchlitz eingeleitet und die abbindende Komponente mit der ersten Suspension zu einer zweiten abbindenden Suspension vermischt, welche zu der Schlitzwand aushärtet.

Ein Grundgedanke der Erfindung besteht darin, das von den Fräsrädern abgeräumte Bodenmaterial im Frässchlitz durch die Wirkung der Fräsräder mit der Flüssigkeit "in situ" zu vermengen und dabei zunächst eine Flüssigkeit-Bodenmaterial-Mischung als erste, nicht aushärtende Suspension herzustellen. Die Flüssigkeit kann auch Wasser sein. Besonders vorteilhaft ist es, wenn als Flüssigkeit eine Bentonit-Wasser-Suspension verwendet wird. Diese erste Suspension übt eine stützende Wirkung auf die angrenzenden Wandungen des Frässchlitzes aus und sichert die Stabilität des frisch erstellten Frässchlitzes. Daneben entfällt die Notwendigkeit, das gesamte abgeräumte Bodenmaterial durch Pumpeinrichtungen aufwändig nach über Tage zu fördern. Das abgeräumte Bodenmaterial kann von den Fräsrädern in einen rückwärtigen Bereich des Frässchlitzes gefördert werden, wobei der rückwärtige Bereich ein Bereich sein kann, der im Frässchlitz oberhalb des Rahmens ausgebildet ist. Aufgrund der nicht aushärtenden Eigenschaft besteht keine Gefahr eines unerwartenden Abbindens, wodurch die Fräse im Schlitz festgesetzt und verloren werden kann. Es besteht zum Fräsen des Schlitzes bei harten Böden oder großen Tiefen ausreichend Zeit.

Erfindungsgemäß wird nach dem Erreichen der gewünschten Schlitztiefe beim Herausziehen der Schlitzwandfräse aus dem Boden eine abbindende Komponente an dem Rahmen der Schlitzwandfräse in den Frässchlitz eingeleitet und die abbindende Komponente mit der ersten Suspension zu einer zweiten abbindenden Suspension vermischt, welche zu der Schlitzwand aushärtet. Es handelt sich also sozusagen um ein 1,5-Phasen-Verfahren.

Da diese abbindende Komponente erst in einem späteren Verfahrensschritt beim Herausziehen der Schlitzwandfräse aus dem Boden und nicht bereits beim Absenken der Schlitzwandfräse eingeleitet wird, können für das Abteufen der Schlitzwandfräse auch längere Zeiträume zum Erstellen von sehr tiefen Frässchlitzen in Anspruch genommen werden, ohne dass die Gefahr eines Festsetzens der Schlitzwandfräse durch ein vorzeitiges Aushärten der Suspension besteht. Insbesondere kann der Zeitpunkt des Herausziehens der Schlitzwandfräse aus dem Boden zu einem frei wählbaren Zeitpunkt erfolgen. Das Einleiten der abbindenden Komponente in die erste Suspension kann mit der gleichen Einrichtung durchgeführt werden mit der die Flüssigkeit in den Frässchlitz eingeleitet wurde. Dadurch wird der apparative Aufwand für zusätzliche Pump- und Leitungselemente reduziert, wodurch weitere Kosten, insbesondere für die Wartung, entfallen.

Grundsätzlich ist es möglich, die abbindende Komponente an einer beliebigen Stelle innerhalb des Frässchlitzes einzuleiten. Eine besonders gute Durchmischung der abbindenden Komponente mit der Flüssigkeit sowie dem abgeräumten Bodenmaterial wird jedoch dadurch erreicht, dass die abbindende Komponente am Rahmen der Schlitzwandfräse unmittelbar im Bereich eines Fräsrades zur Durchmischung mit der ersten Suspension eingeleitet wird.

In Wasser eingerührtes Bentonit bildet ein nicht-Newtonsches Fluid und weist ein thixotropes Verhalten auf. Es bildet in Ruhe ein hochviskoses Material und eignet sich daher gut als Stützflüssigkeit mit verringerter Sedimentationstendenz der eingemischten Boden- und Feststoffteile. Ferner dient es als Gleitmittel beim Abteufen der Schlitzwandfräse. Durch die geringe Dichte der Bentonit-Wasser-Suspension kann diese verhältnismäßig leichte Suspension später einfach durch schwerere Suspensionen verdrängt werden. Außer Bentoniten können auch andere Tonarten, insbesondere aus der Familie der Montmorillionite, verwendet werden. Ferner kann es vorteilhaft sein, der ursprünglichen Bentonit-Wasser-Suspension noch weitere Stoffe zuzugeben, insbesondere Bindemittel mit latent-hydraulischen Eigenschaften. Diese Bindemittel können bewirken, dass die Stützflüssigkeit über eine relativ lange Zeit, bis zu mehreren Tagen, flüssig bleibt und somit als Stützflüssigkeit verwendet werden kann. Das Bindemittel mit den latent-hydraulischen Eigenschaften führt anders als die Zugabe von Zement nicht dazu, dass die Stützsuspension schon nach kurzer Zeit ansteift. Diese sogenannten latent-hydraulischen Bindemittel sind beispielsweise Ölschiefer oder Bindemittel auf Ölschieferbasis.

Die modifizierten Stützsuspensionen haben den wesentlichen Vorteil, dass bei einer späteren Aushärtung diese Stützsuspension mit dem Bindemittel, wie Zement, in Berührung kommt. Bei der Bildung möglicher Einschlüsse der Stützsuspension im ausgehärteten Zustand dienen die alkalisch anregenden Komponenten des Zements dazu, die latent-hydraulischen Eigenschaften des der Suspension zugegebenen Bindemittels in hydraulische Eigenschaften umzuwandeln. Dies hat zur Folge, dass die eingeschlossene Suspension beziehungsweise der Suspensionsfilm hydraulische Eigenschaften entwickelt, das heißt zwischen den Bentonitplättchen baut sich aus den ursprünglich latent-hydraulischen Körnern des Bindemittels ein Kristallgerüst auf, wie es beim Erhärten des Zements auch erfolgt. Auf diese Weise wird die Gefahr des Wasserentzugs geringer, und die Festigkeit der gesamten Struktur, insbesondere im Bereich der Suspensionseinschlüsse, erhöht sich. Somit werden die Festigkeitsverluste durch Einschlüsse im Vergleich zu einer reinen Bentonit-Suspension verringert. Weiterhin wird die Wasserwegigkeit durch die höhere Stabilität des Suspensionsfilms reduziert.

Alternativ und mit einer vergleichbaren Wirkung wie die latent-hydraulischen Bindemittel können auch puzzolanische Bindemittel verwendet werden. Bei puzzolanischen Bindemitteln wie Flugasche und Hüttensand als Zugabe für die Stützsuspension kann es zweckmäßig sein, als alkalisch anregende Komponenten Wasserglas, Kalkmilch, Luftkalk, Portlandzement, Gips oder sonstige Stoffe, die Calciumhydroxide freisetzen können, einzusetzen. Die Zugabe der Anreger bei Verwendung von puzzolanischen Bindemitteln kann entweder gleich in der Stützsuspension erfolgen, oder es kann zweckmäßig sein, diese Anreger später zuzugeben.

Geeigneterweise ist die abbindende Komponente eine mineralische Suspension.

Damit können die zu der Abbindung führenden Verbindungen in einer sehr hohen Konzentration bei einem geringen Volumen in relativ kurzer Zeit zugeführt werden. Mit der Suspension wird eine für die Festigkeit der Schlitzwand mitbestimmende Gesteinskörnung eingebracht. Die Gesteinskörnung kann in Form von Rundkorn oder in gebrochener Form zusammen mit einem Bindemittel, wie Zement oder Kalk, und Zugabewasser zu Beton oder Mörtel verarbeitet sein. Um die geforderten Eigenschaften des Baustoffs zu erhalten, ist die Gesteinskörnung in ihrer Zusammensetzung entsprechend zusammenzustellen. Die Gesteinskörnung sollte über eine hohe Raumbeständigkeit verfügen und keine Verunreinigungen an Metallen oder Kunststoffen sowie Stoffen organischen Ursprungs, wie Holz oder Pflanzenreste, enthalten. Als natürliche Gesteinskörnungen aus mineralischen Vorkommen sind vor allem die ungebrochenen Kiese und Sande, sowie Schotter, Splitte, Brechsande und Festgesteine geeignet. Als künstliche, industriell hergestellte Gesteinskörnungen mineralischen Ursprungs können die industriellen Nebenerzeugnisse wie Hochofenstichschlacke, Hüttensand, Stahlwerkschlacke, Schlacke aus der Kupfererzeugung, Gießerei-Kupolofenschlacke, Steinkohlenflugasche, Schmelzkammergranulat, Kesselasche aus der Steinkohlenfeuerung, Gießereirestsand oder Hausmüllverbrennungsasche verwendet werden. Auch rezyklierte Gesteinskörnungen, die durch Aufbereitung anorganischen Materials, das zuvor als Baustoff eingesetzt war, entsteht, kann eingesetzt werden. Hierzu zählen ausgebaute, aufbereitete und wieder eingebaute Asphalte und Betone.

Besonders bevorzugt wird mit der abbindenden Komponente Sand in den Bereich der Fräsräder eingeleitet. Gerade bei stark bindigem Bodenmaterial kann so eine verbesserte Festigkeit durch die Zugabe von Sand als weiterer Feststoffanteil zum Fräsklein erreicht werden.

Die Kornzusammensetzung der Gesteinskörnung bestimmt die Dichte und den Wasseranspruch einer Mischung der zur Erzielung einer ausreichenden Verarbeitbarkeit erforderlich ist. Das Größtkorn ist durch konstruktive Randbedingungen, beispielsweise durch Bauteilabmessungen und Bewehrungsdichte, begrenzt. Die Zuschlagstoffe bis ca. 0,125 mm bilden zusammen mit dem Zement den Mehlkorngehalt und beeinflussen somit die Verarbeitbarkeit.

Für eine gute Verarbeitbarkeit ist es erstrebenswert, die Korngrößen so zusammenzusetzen, dass eine besonders dichte Packung der Zuschlagskörner möglich und somit eine größere Dichte erzielbar ist.

Besonders vorteilhaft ist es, wenn die Suspension ein Mörtel ist, welcher Anteile aus Wasser, Zement und Sand aufweist.

Mörtel ist ein Baustoff, der aus einem Bindemittel, beispielsweise Kalk oder Zement, einer Gesteinskörnung, etwa mit bis zu 4 mm Korngröße, sowie gegebenenfalls Zusatzstoffen und Zusatzmitteln, sowie Zugabewasser besteht, und der durch die chemische Reaktion des Bindemittels erhärtet. Die geeignetste Gesteinskörnung für den Mörtel ist Sand, es können jedoch auch andere Materialien, wie beispielsweise Feinkies, verwendet werden. Als Bindemittel ist Zement besonders geeignet. Daneben können aber auch weitere mineralische Bindemittel, wie Kalk, Gips, Anhydrit, Magnesit und Lehm oder organische Bindemittel eingesetzt werden.

Grundsätzlich muss der eingebrachte Mörtel im frischen Zustand Eigenschaften einer Suspension aufweisen. Dies umfasst die Rheologie, das Sedimentationsverhalten sowie das Erstarrungsverhalten. Bevorzugt beträgt die Dichte des Mörtels < 2,2 kg/dm³. Bei dem erfindungsgemäßen Verfahren ist besonders vorteilhaft, wenn der Mörtel selbst einen Zementanteil von rund 350 bis 550 kg pro m³ aufweist. Das Verhältnis von Wasser zu Zement (W/Z-Wert) sollte vorteilhafterweise zwischen 0,70 und 1,0 und der Sandanteil in Abhängigkeit des gewählten W/Z-Werts sowie des gewählten Zementgehalts zwischen 1100 kg und 1500 kg pro m³ Mörtel liegen.

In gemischten Böden kann mit der Verwendung eines entsprechenden Mörtels im Vergleich zu einer Zementsuspension eine Erhöhung der Druckfestigkeit nach 28 Tagen um mindestens 50% erzielt werden. Der mit dem Mörtel eingebrachte Zementgehalt pro m³ gemischten Bodenvolumens ist dabei rund 15 bis 30 Massen-%, insbesondere etwa 23%, geringer als der mit der Suspension eingebrachte Zementgehalt. Dies beruht zum einen auf dem Effekt, dass ein Teil des festigkeitsstörenden Bodens durch den Sand ersetzt wird, zum anderen auf das Einbringen eines Korngerüsts in den Boden. Somit kann durch die Zugabe von Mörtel bei stark bindigen Böden eine deutliche Verbesserung der Festigkeit im Vergleich zu einer Zugabe einer reinen Zementsuspension erreicht werden. Der Mörtel selbst kann durch übliche bereits bestehende Mischanlagentechniken hergestellt werden.

Es ist zweckmäßig, wenn der Sandgehalt des Mörtels in Abhängigkeit von der Bodenbeschaffenheit eingestellt wird.

Gewachsene oder geschüttete Böden können hinsichtlich ihrer Beschaffenheit insbesondere in bindige und nicht-bindige Böden eingeteilt werden.

Bindige Böden sind Böden mit einem hohen Anteil an Ton oder Schluff. Nach Erkenntnis der Erfindung sind diese als Materialkomponente für Schlitzwände eher ungeeignet. Unter Druckbelastung verformen sich bindige Böden über einen längeren Zeitraum relativ stark. Wasser kann sich ansammeln, die Stabilität und Festigkeit verringern und sich an den Bauwerksaußenseiten aufstauen. Außerdem reagiert der bindige Boden empfindlich auf Frost, da das Porenwasser gefriert und es zu Volumenänderungen kommt. In Boden eingebundene Tonminerale neigen ferner unter Einfluss von Wasser außerdem zum Quellen oder Schrumpfen.

Ein nicht-bindiger Boden ist ein Boden mit einem geringen Anteil an Feinkorn. Zu dieser Bodenart zählen Sand und Kies in verschiedenen Korngrößen und Mischungen. Hierbei handelt es sich um ein geeignetes Schlitzwandmaterial, vorausgesetzt es ist nicht locker gelagert. Dies liegt zum einen daran, dass sein mechanisches Verhalten nicht vom Wassergehalt abhängt und zum anderen daran, dass das Korngefüge relativ stabil ist. Die geringe Komprimierbarkeit von Sand führt ferner dazu, dass Setzungen relativ gering bleiben. Diese Setzungen treten darüber hinaus unmittelbar beim Aufbringen der Lasten auf und sind daher zu einem wesentlichen Teil bei Fertigstellung des Rohbaus abgeschlossen. Zu Frostschäden kommt es bei nichtbindigen Böden in der Regel nicht, da die Volumenänderung des Wassers durch die Luftporenräume im Korngefüge aufgenommen werden kann.

Je nach Beschaffenheit des Bodenmaterials, bindig oder nicht-bindig, wird bei den "in-situ"-Verfahren zur Schlitzwandherstellung die Festigkeit und Dichtigkeit der Schlitzwand erheblich beeinflusst. Bindige Böden können zu undichten und instabilen Schlitzwänden führen.

Durch eine erfindungsgemäße spezifische Einstellung des Sandgehaltes des Mörtels in Abhängigkeit von der Bodenbeschaffenheit kann die Qualität der Schlitzwand entsprechend den Anforderungen verbessert werden. Somit kann beispielsweise Material bindiger Böden, das für Schlitzwände eher ungeeignet ist, durch Zugabe entsprechender Mengen an Sand sozusagen in nicht-bindiges Bodenmaterial mit einer höheren Qualität umgewandelt werden. Dadurch wird die Stabilität und Festigkeit der daraus gebildeten Schlitzwände verbessert und auch die Dichtigkeit gegenüber dem Grundwasser erhöht. Ein entsprechender Sandgehalt führt insbesondere zur Einführung eines geeigneten Korngerüsts in das Bodenmaterial und dadurch zur Verbesserung der Strukturqualität der gebildeten Schlitzwand.

Es ist bevorzugt, wenn die Flüssigkeit durch das Einleiten der abbindenden Komponente zumindest teilweise verdrängt wird.

Dadurch können Anteile der ersten Suspension, insbesondere das abgeräumte Bodenmaterial, zur Bildung der Schlitzwand verwendet werden. Die Verdrängung der Flüssigkeit, beziehungsweise der ersten Suspension, erfolgt durch einfaches Einleiten der abbindenden Komponente, welche im Allgemeinen eine deutlich höhere Dichte als die erste Suspension aufweist und diese somit nach oben verdrängt. Das Verdrängen der ersten Suspension erfolgt zudem über das Verdrängen beim Herausziehen der Schlitzwandfräse. Dies beruht im Wesentlichen auf dem Dichteunterschied zwischen dem eingeleiteten Mörtel und der ersten Suspension. Um die Verdrängung zu unterstützen, können zusätzlich am oberen Bereich des Schlitzes Ablaufkanäle oder Pumpeinrichtungen eingesetzt werden. Die Verdrängung ist aber nicht vollständig. Der verdrängte Anteil der ersten Suspension beträgt 40% bis 70%, vorzugsweise etwa 60%.

Bei dieser Ausführung können aufwändige Absaugeinrichtungen entfallen, welche aber grundsätzlich auch einsetzbar sind. Ferner kann vorgesehen sein, dass bereits in der Flüssigkeit beziehungsweise der ersten Suspension eine Komponente enthalten ist, welche erst in Verbindung mit der zugeführten abbindenden Komponente aushärtet.

Der restliche Teil der ersten Suspension, d.h. die Flüssigkeit und das Fräsklein, werden zum Bilden der zweiten Suspension eingesetzt. Durch diese gezielte nur teilweise Verdrängung der ersten Suspension liegt sozusagen ein 1,5-Phasen-Verfahren vor.

Geeigneterweise wird die Flüssigkeit und/oder die abbindende Komponente in den Frässchlitz unter Druck eingeleitet.

Auf diese Weise können erheblich größere Volumenraten der Flüssigkeit und/oder der abbindenden Komponente in den Frässchlitz eingeführt werden. Zudem ist es in Anbetracht des möglicherweise bereits anliegenden Gegendruckes durch das umgebende Medium erforderlich, mit einem entsprechend höheren Druck eine Einleitung der Flüssigkeit und/oder der abbindenden Komponente zu erreichen. Zudem werden durch eine höhere Strömungsrate des eingeleiteten Fluids Turbulenzen gebildet, welche zu einer weiteren Durchmischung beitragen.

In einer besonders bevorzugten Ausführungsform des erfindungsgemäßen Verfahrens werden zwei Fräsradpaare beim Herausziehen der Schlitzwandfräse reversierend angetrieben.

Grundsätzlich ist es möglich, die Fräsräder beim Absenken und/oder Herausziehen der Schlitzwandfräse gleichförmig anzutreiben. Eine besonders gute Fräswirkung und/oder eine besonders gute Durchmischung des Bodenmaterials mit der Flüssigkeit und/oder der abbindenden Komponente kann dadurch erzielt werden, dass die Fräsräder reversierend angetrieben werden. Durch ein zeitweises Umkehren der Drehrichtung des Fräsrades bilden sich im Bodenmaterial Verwirbelungen aus, die für eine besonders gute Vermischung mit der Flüssigkeit sowie der abbindenden Komponente sorgen. Werden die Fräsräder beim Herausziehen der Schlitzwandfräse aus dem Frässchlitz gleichförmig oder reversierend angetrieben, lässt sich der für das Ziehen notwendige Kraftaufwand deutlich verringern, und eine zusätzliche Durchmischung des abgeräumten Bodenmaterials mit der abbindenden Komponente wird erreicht.

Bei der Herstellung des Frässchlitzes kann die Schlitzwandfräse gleichförmig im Boden bewegt werden. Besonders vorteilhaft ist es jedoch, dass die Schlitzwandfräse dabei zumindest zeitweise in eine alternierende Aufwärts-/Abwärtsbewegung versetzt wird. Hierdurch wird eine besonders gute Durchmischung des abgetragenen Bodenmaterials mit der Flüssigkeit und/oder der abbindenden Komponente erzielt. Der Hub dieser alternierenden Aufwärts-/Abwärtsbewegung kann deutlich geringer als die Gesamthöhe des Schlitzes sein und etwa 3 m bis 10 m betragen. Er kann insbesondere in der Größenordnung des Durchmessers der Fräsräder oder der Höhe des Fräsenrahmens liegen. Eine solche zumindest zeitweise durchgeführte abwechselnde Aufwärts- und Abwärtsbewegung kann dadurch erzielt werden, dass die Schlitzwandfräse von einem Baugerät angehoben und anschließend wieder abgelassen wird. Eine alternierende Aufwärts-/Abwärtsbewegung kann sowohl beim Abteufen des Frässchlitzes als auch beim Herausziehen der Schlitzwandfräse aus dem Frässchlitz durchgeführt werden. Als Fräse kann grundsätzlich die Vorrichtung eingesetzt werden, die aus der EP 1 452 645 B2 bekannt ist.

## Patentansprüche

1. Verfahren zum Herstellen einer Schlitzwand im Boden, bei dem
- mindestens ein an einem Rahmen einer Schlitzwandfräse angeordnetes Fräsrad durch einen Antrieb in eine Drehbewegung versetzt wird,
- die Schlitzwandfräse in den Boden abgesenkt wird, wobei unterhalb des Fräsrades befindliches Bodenmaterial abgeräumt und ein Frässchlitz hergestellt wird, und
- eine Flüssigkeit am Rahmen der Schlitzwandfräse in den Frässchlitz eingeleitet und unmittelbar im Frässchlitz mit dem abgeräumten Bodenmaterial zu einer ersten, nicht aushärtenden Suspension vermischt wird,
**dadurch gekennzeichnet,**
- **dass** nach dem Erreichen der gewünschten Schlitztiefe beim Herausziehen der Schlitzwandfräse aus dem Boden eine abbindende Komponente an dem Rahmen der Schlitzwandfräse in den Frässchlitz eingeleitet wird, und
- **dass** die abbindende Komponente mit der ersten Suspension zu einer zweiten abbindenden Suspension vermischt wird, welche zu der Schlitzwand aushärtet.

2. Verfahren zum Herstellen einer Schlitzwand nach Anspruch 1,
**dadurch gekennzeichnet,**
**dass** die abbindende Komponente am Rahmen der Schlitzwandfräse unmittelbar im Bereich eines Fräsrades zur Durchmischung mit der ersten Suspension eingeleitet wird.

3. Verfahren zum Herstellen einer Schlitzwand nach Anspruch 1 oder 2,
**dadurch gekennzeichnet,**
**dass** als Flüssigkeit eine Bentonit-Wasser-Suspension verwendet wird.

4. Verfahren zum Herstellen einer Schlitzwand nach einem der vorhergehenden Ansprüche,
**dadurch gekennzeichnet,**
**dass** mit der abbindenden Komponente Sand in den Bereich der Fräsräder eingeleitet wird.

5. Verfahren zum Herstellen einer Schlitzwand nach Anspruch 4,
**dadurch gekennzeichnet,**
**dass** die Suspension ein Mörtel ist, welcher Anteile aus Wasser, Zement und Sand aufweist.

6. Verfahren zum Herstellen einer Schlitzwand nach Anspruch 5,
**dadurch gekennzeichnet,**
**dass** der Sandgehalt der Mörtelsuspension in Abhängigkeit von der Bodenbeschaffenheit eingestellt wird.

7. Verfahren zum Herstellen einer Schlitzwand nach einem der vorhergehenden Ansprüche,
**dadurch gekennzeichnet,**
**dass** die Flüssigkeit durch das Einleiten der abbindenden Komponente zumindest teilweise verdrängt und an einer Oberseite des Frässchlitzes abgeführt wird.

8. Verfahren zum Herstellen einer Schlitzwand nach einem der vorhergehenden Ansprüche,
**dadurch gekennzeichnet,**
**dass** die abbindbare Flüssigkeit und/oder die abbindende Komponente in den Frässchlitz unter Druck eingeleitet wird.

9. Verfahren zum Herstellen einer Schlitzwand nach einem der vorhergehenden Ansprüche,
**dadurch gekennzeichnet,**
**dass** zwei Fräsradpaare beim Absenken und/oder Herausziehen der Schlitzwandfräse reversierend angetrieben werden.

10. Verfahren zum Herstellen einer Schlitzwand nach einem der vorhergehenden Ansprüche,
**dadurch gekennzeichnet,**
**dass** die Schlitzwandfräse beim Absenken oder Herausziehen aus dem Frässchlitz zumindest zeitweise in eine alternierende Aufwärts-/Abwärtsbewegung versetzt wird.
